# EUROPEAN PATENT APPLICATION

(11) **EP 3 995 387 A1**
(43) Date of publication of application: **11.05.2022**
(21) Application number: 21205854.9
(22) Date of filing: 02.11.2021
(51) Int. Cl.: B62J 45/422, B62J 50/22, B62J 45/414, B62J 45/415, B62M 7/02, B60R 11/04, F16M 11/10, F16M 13/02, G01S 13/88, B60W 30/09, G01S 13/931, G01S 7/40

(54) **CONTROL APPARATUS, AMBIENT ENVIRONMENT ACQUISITION SYSTEM, LEAN VEHICLE, AND CONTROL METHOD**

(30) Priority: 06.11.2020 JP 2020185519
(71) Applicant: Robert Bosch GmbH, 70442 Stuttgart (DE)
(72) Inventor: Ohtaka, Jun, Kanagawa, 2248501 (JP)
(74) Representative: Isarpatent

(57) **Abstract**

A control apparatus capable of suppressing a decrease in accuracy of rider assistance by a rider assistance system more than that in the past is obtained even in the case of a configuration in which an ambient environment detection apparatus moves together with a handlebar of a lean vehicle. A control apparatus is a control apparatus for controlling a posture of an ambient environment detection apparatus that detects an ambient environment of a lean vehicle to assist a rider of the lean vehicle in driving, in which when the ambient environment detection apparatus is mounted to the lean vehicle, the ambient environment detection apparatus detects at least an ambient environment in front of the lean vehicle and moves together with a handlebar of the lean vehicle, and the control apparatus is configured to operate a drive mechanism that changes the posture of the ambient environment detection apparatus when the lean vehicle turns and change the posture of the ambient environment detection apparatus so that a detection center axis of the ambient environment detection apparatus is directed upward when compared to a case where the drive mechanism is not operated.

## Description

### BACKGROUND OF THE INVENTION

### 1. Field of the Invention

The present invention relates to a control apparatus that controls a posture of an ambient environment detection apparatus that detects an ambient environment of a lean vehicle to assist a rider of the lean vehicle in driving, an ambient environment acquisition system including the control apparatus, the lean vehicle including the ambient environment acquisition system, and a control method of controlling a posture of an ambient environment detection apparatus that detects an ambient environment of a lean vehicle to assist a rider of the lean vehicle in driving.

### 2. Description of the Background Art

A conventional automatic two-wheeled vehicle, which is a type of lean vehicle, has been proposed to adopt a rider assistance system that assists a rider in driving (for example, see JP-A-2009-116882). The rider assistance system detects an ambient environment of the automatic two-wheeled vehicle by an ambient environment detection apparatus mounted to the automatic two-wheeled vehicle, and executes operations (for example, warning function, emergency braking function, cruise driving function, etc.) for assisting a rider of the automatic two-wheeled vehicle in driving based on a detection result of the ambient environment detection apparatus. Note that the lean vehicle is a vehicle whose vehicle body inclines in a turning direction during turning.

### SUMMARY OF THE INVENTION

When the ambient environment detection apparatus is mounted to the lean vehicle, it is also assumed that the ambient environment detection apparatus is mounted at a position where the ambient environment detection apparatus moves with a handlebar. Here, in the lean vehicle, when the vehicle body inclines in the turning direction during turning, self-steering occurs in which the handlebar naturally turns in the turning direction. Therefore, in the case of a configuration in which the ambient environment detection apparatus moves together with the handlebar of the lean vehicle, the ambient environment detection apparatus faces the ground when the lean vehicle turns. That is, in the case of the configuration in which the ambient environment detection apparatus moves together with the handlebar of the lean vehicle, a detection center axis of the ambient environment detection apparatus faces the ground compared to a case where the lean vehicle moves straight when the lean vehicle turns. For this reason, in the case of the configuration in which the ambient environment detection apparatus moves together with the handlebar of the lean vehicle, the accuracy of rider assistance by the rider assistance system may decrease due to inability to detect a distant object, detection of the ground as an obstacle, etc.

The invention has been made against the background of the above-mentioned problem, and an object of the invention is to obtain a control apparatus, which controls a posture of the ambient environment detection apparatus that detects an ambient environment of the lean vehicle to assist the rider of the lean vehicle with driving, capable of suppressing a decrease in the accuracy of rider assistance by the rider assistance system compared to the past even in the case of the configuration in which the ambient environment detection apparatus moves together with the handlebar of the lean vehicle. In addition, an object of the invention is to obtain an ambient environment acquisition system including the control apparatus configured in this way. In addition, an object of the invention is to obtain a lean vehicle including the ambient environment acquisition system configured in this way. In addition, an object of the invention is to obtain a control method, which is for controlling a posture of the ambient environment detection apparatus that detects an ambient environment of the lean vehicle to assist the rider of the lean vehicle with driving, capable of suppressing a decrease in the accuracy of rider assistance by the rider assistance system compared to the past even in the case of the configuration in which the ambient environment detection apparatus moves together with the handlebar of the lean vehicle.

A control apparatus according to the invention is a control apparatus for controlling a posture of an ambient environment detection apparatus that detects an ambient environment of a lean vehicle to assist a rider of the lean vehicle in driving, in which when the ambient environment detection apparatus is mounted to the lean vehicle, the ambient environment detection apparatus detects at least an ambient environment in front of the lean vehicle and moves together with a handlebar of the lean vehicle, and the control apparatus is configured to operate a drive mechanism that changes the posture of the ambient environment detection apparatus when the lean vehicle turns and change the posture of the ambient environment detection apparatus so that a detection center axis of the ambient environment detection apparatus is directed upward when compared to a case where the drive mechanism is not operated.

In addition, an ambient environment acquisition system according to the invention includes an ambient environment detection apparatus that detects at least an ambient environment in front of a lean vehicle when mounted to the lean vehicle and moves together with a handlebar of the lean vehicle, a drive mechanism that changes a posture of the ambient environment detection apparatus, and the control apparatus according to the invention.

In addition, the lean vehicle according to the invention includes the ambient environment acquisition system according to the invention.

In addition, a control method according to the invention is a control method of controlling a posture of an ambient environment detection apparatus that detects an ambient environment of a lean vehicle to assist a rider of the lean vehicle in driving, when the ambient environment detection apparatus is mounted to the lean vehicle, the ambient environment detection apparatus detecting at least an ambient environment in front of the lean vehicle and moving together with a handlebar of the lean vehicle, the method including a posture control step of operating, by a control apparatus, a drive mechanism that changes the posture of the ambient environment detection apparatus when the lean vehicle turns and changing the posture of the ambient environment detection apparatus so that a detection center axis of the ambient environment detection apparatus is directed upward when compared to a case where the drive mechanism is not operated.

In the invention, when the lean vehicle turns, the drive mechanism, that is, a mechanical mechanism changes the posture of the ambient environment detection apparatus so that the detection center axis of the ambient environment detection apparatus is directed upward when compared to a case where the drive mechanism is not operated. For this reason, in the invention, even in the case of a configuration in which the ambient environment detection apparatus moves together with the handlebar of the lean vehicle, it is possible to reduce the shift of the detection center axis of the ambient environment detection apparatus in the vertical direction during straight traveling and turning of the lean vehicle more than that in the past. Therefore, the invention can suppress a decrease in accuracy of the rider assistance by the rider assistance system more than that in the past even in the case of the configuration in which the ambient environment detection apparatus moves together with the handlebar of the lean vehicle.

### BRIEF DESCRIPTION OF THE DRAWINGS

Fig. 1 is a side view of a lean vehicle to which an ambient environment acquisition system is mounted according to an embodiment of the invention.
Fig. 2 is a schematic view around a front wheel of the lean vehicle according to the embodiment of the invention observed from a front of the lean vehicle in a state where the lean vehicle inclines to a side.
Fig. 3 is a schematic view around the front wheel of the lean vehicle according to the embodiment of the invention observed from a side of the lean vehicle in a state where the lean vehicle inclines to a side.
Fig. 4 is a schematic view around the front wheel of the lean vehicle according to the embodiment of the invention observed from a side of the lean vehicle in a state where the lean vehicle inclines to a side.
Fig. 5 is a diagram illustrating an example of a drive mechanism according to the embodiment of the invention.
Fig. 6 is a block diagram illustrating an example of a control apparatus of the ambient environment acquisition system according to the embodiment of the invention.
Fig. 7 is a diagram illustrating a control flow of an example of an operation in the control apparatus of the ambient environment acquisition system according to the embodiment of the invention.

### DETAILED DESCRIPTION OF THE INVENTION

Hereinafter, a control apparatus, an ambient environment acquisition system, a lean vehicle, and a control method according to the invention will be described with reference to the drawings.

Note that the configuration, operation, etc. described below are examples of the invention, and the invention is not limited to such configurations, operations, etc.

For example, in the following, an automatic two-wheeled vehicle is illustrated as the lean vehicle. However, the lean vehicle refers to all vehicles whose vehicle body inclines in a turning direction during turning. Therefore, the lean vehicle is not limited to the automatic two-wheeled vehicle. Examples of the lean vehicle include a motorcycle whose vehicle body inclines in a turning direction during turning (automatic two-wheeled vehicle and automatic three-wheeled vehicle whose vehicle body inclines in a turning direction during turning), a bicycle, etc. Further, the motorcycle whose vehicle body inclines in the turning direction during turning may be one using an engine as a propulsion source or an electric motor as a propulsion source, and examples thereof include a motorbike, a scooter, an electric scooter, etc. In addition, the bicycle means all vehicles that can be propelled on a road by a pedaling force of a rider applied to pedals. Examples of the bicycle include an ordinary bicycle, an electrically power assisted bicycle, an electric bicycle, etc.

Further, in the following, the same or similar description is appropriately simplified or omitted. Further, in each figure, the same or similar members or parts are omitted from being given reference symbols or given the same reference symbols. Further, for the detailed structure, the illustration is simplified or omitted as appropriate.

### Embodiment

Hereinafter, a description will be given of a control apparatus according to an embodiment, an ambient environment acquisition system including the control apparatus, a lean vehicle including the ambient environment acquisition system, and a control method according to the embodiment.

### <Configuration of lean vehicle to which ambient environment acquisition system is mounted>

A description will be given of configurations of the control apparatus according to the embodiment, the ambient environment acquisition system including the control apparatus, and the lean vehicle including the ambient environment acquisition system.

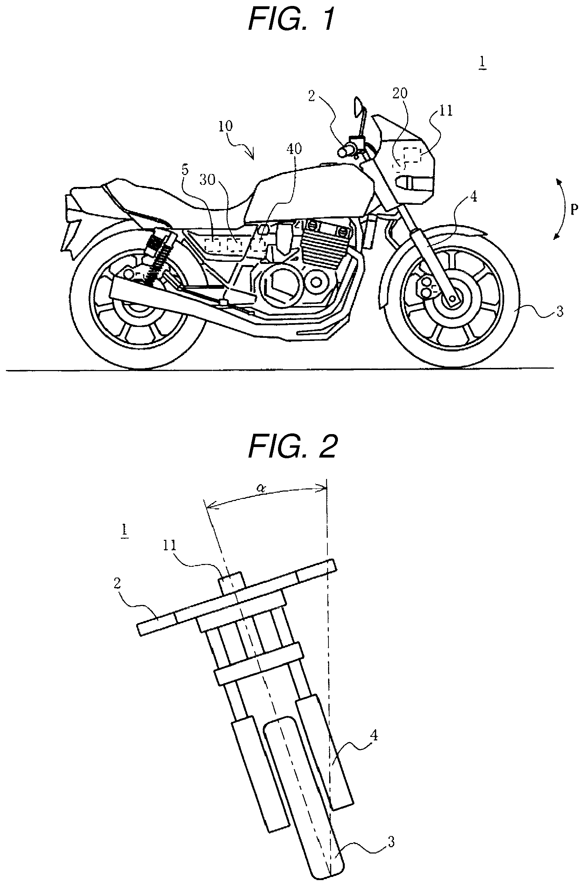

Fig. 1 is a side view of the lean vehicle to which the ambient environment acquisition system is mounted according to the embodiment of the invention. Note that in Fig. 1, a right side of the page is a front side of the lean vehicle 1.

For example, the lean vehicle 1 is an automatic two-wheeled vehicle. The lean vehicle 1 includes a front wheel 3 and a handlebar 2 which is connected to the front wheel 3 and serves as an operation unit of the front wheel 3. Further, in the present embodiment, the lean vehicle 1 includes a suspension 4 between a vehicle body and the front wheel 3.

A rider assistance system is mounted to the lean vehicle 1. The rider assistance system includes an ambient environment acquisition system 10 and a control apparatus 5. Further, the ambient environment acquisition system 10 includes an ambient environment detection apparatus 11. The ambient environment detection apparatus 11 detects an ambient environment of the lean vehicle 1 in order to assist the rider of the lean vehicle 1 in driving, and for example, detects an object located around the lean vehicle 1 (for example, an obstacle, a preceding vehicle, a sign, etc.). The ambient environment detection apparatus 11 is, for example, a radar, an image pickup apparatus, an ultrasonic sensor, etc. In the present embodiment, the ambient environment detection apparatus 11 detects at least the ambient environment in front of the lean vehicle 1 when mounted to the lean vehicle 1. Further, in the present embodiment, the ambient environment detection apparatus 11 is configured to be provided directly to the handlebar 2 or configured to be provided to a structure that moves together with the handlebar 2. That is, the ambient environment detection apparatus 11 is configured to move together with the handlebar 2 of the lean vehicle 1. Details of the ambient environment acquisition system 10 will be described later.

The control apparatus 5 executes operations (for example, warning function, emergency braking function, cruise driving function, etc.) for assisting the rider of the lean vehicle 1 in driving based on a detection result of the ambient environment detection apparatus 11. For example, the control apparatus 5 includes a microcomputer, a microprocessor unit, etc. in part or in whole. Further, for example, the control apparatus 5 may be configured by an updatable one such as firmware, or may be a program module, etc. executed by a command from a CPU, etc. in part or in whole. For example, the control apparatus 5 may be one apparatus or may be divided into a plurality of parts.

Note that a traveling state detection apparatus 40 illustrated in Fig. 1 detects a traveling state of the lean vehicle 1, and details will be described later.

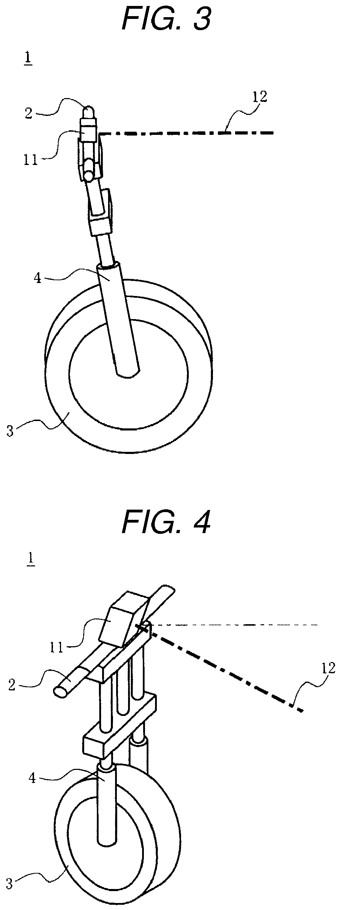

Fig. 2 is a schematic view around the front wheel of the lean vehicle according to the embodiment of the invention observed from a front of the lean vehicle in a state where the lean vehicle inclines to a side. Figs. 3 and 4 are schematic views around the front wheel of the lean vehicle according to the embodiment of the invention observed from a side of the lean vehicle in a state where the lean vehicle inclines to a side. Note that Fig. 2 illustrates the lean vehicle 1 inclined in a turning direction at a lean angle α. In addition, Figs. 3 and 4 are diagrams around the front wheel 3 of the lean vehicle 1 inclined in the turning direction at the lean angle α observed from a side, and a right side of the page is the front side of the lean vehicle 1. In addition, Figs. 2 and 3 illustrate the lean vehicle 1 in a state where self-steering does not occur. Fig. 4 illustrates the lean vehicle 1 in a state where self-steering occurs. Note that Fig. 4 illustrates a detection center axis 12 (in other words, the detection center axis 12 illustrated in Fig. 3) of the ambient environment detection apparatus 11 in the state where self-steering does not occur by an alternate long and short dash line which is an imaginary line. As will be described later, when viewed from the side of the lean vehicle 1, a direction of the detection center axis 12 of the ambient environment detection apparatus 11 in a state where self-steering does not occur is substantially the same direction as that of the detection center axis 12 of the ambient environment detection apparatus 11 in a state where the lean vehicle 1 is traveling straight.

When the lean vehicle 1 turns, the vehicle body inclines in the turning direction. Here, when self-steering does not occur in the lean vehicle 1 during turning of the lean vehicle 1, the detection center axis 12 of the ambient environment detection apparatus 11 becomes substantially the same direction during straight traveling and turning of the lean vehicle 1. For example, it is assumed that the detection center axis 12 of the ambient environment detection apparatus 11 is directed in a substantially horizontal direction when viewed from the side of the lean vehicle 1 when the lean vehicle 1 travels straight. In this case, when self-steering does not occur during turning of the lean vehicle 1, as illustrated in Fig. 3, the detection center axis 12 of the ambient environment detection apparatus 11 becomes the substantially horizontal direction when viewed from the side of the lean vehicle 1.

However, in the lean vehicle 1, when the vehicle body inclines in the turning direction during turning, self-steering occurs in which the handlebar 2 naturally turns in the turning direction. Therefore, in the case of a configuration in which the ambient environment detection apparatus 11 moves together with the handlebar 2, as illustrated in Fig. 4, when the lean vehicle 1 turns, the ambient environment detection apparatus 11 faces the ground. That is, in the case of the configuration in which the ambient environment detection apparatus 11 moves together with the handlebar 2, as illustrated in Fig. 4, when the lean vehicle 1 turns, the detection center axis 12 of the ambient environment detection apparatus 11 faces the ground when compared to a case where the lean vehicle 1 is traveling straight. For this reason, in the case of the configuration in which the ambient environment detection apparatus 11 moves together with the handlebar 2, the accuracy of the rider assistance by the rider assistance system may decrease due to the inability to detect a distant object, detection of the ground as an obstacle, etc.

Here, it is conceivable to change a detection range of the ambient environment detection apparatus 11 by software to correct a shift of the detection center axis 12 of the ambient environment detection apparatus 11 that occurs when the lean vehicle 1 turns. However, the above-mentioned axis shift during turning in the case of the configuration in which the ambient environment detection apparatus 11 moves together with the handlebar 2 may become large and may be difficult to correct by software.

Therefore, as illustrated in Fig. 1, the ambient environment acquisition system 10 according to the present embodiment includes a drive mechanism 20 and a control apparatus 30 in addition to the ambient environment detection apparatus 11, and is configured to be able to suppress the axis shift of the ambient environment detection apparatus 11 by a mechanical mechanism. Hereinafter, details of the ambient environment acquisition system 10 according to the present embodiment will be described.

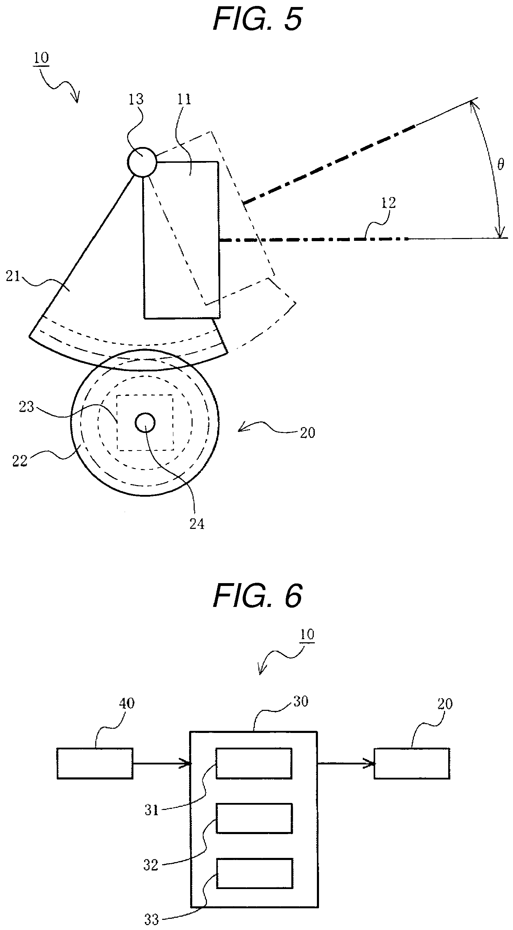

The drive mechanism 20 changes a posture of the ambient environment detection apparatus 11. The drive mechanism 20 can be configured as illustrated in Fig. 5, for example.

Fig. 5 is a diagram illustrating an example of the drive mechanism according to the embodiment of the invention. Fig. 5 is a diagram of the ambient environment detection apparatus 11 and the drive mechanism 20 mounted to the lean vehicle 1 viewed from a side of the lean vehicle 1. Note that in Fig. 5, a right side of the page is the front of the lean vehicle 1. In addition, Fig. 5 illustrates the ambient environment detection apparatus 11 after the posture is changed by the drive mechanism 20 by an alternate long and short dash line which is an imaginary line.

A rotating shaft 13 is attached to the ambient environment detection apparatus 11. The rotating shaft 13 is rotatably held by the handlebar 2 of the lean vehicle 1 or by a structure that moves together with the handlebar 2. The drive mechanism 20 includes a gear 21, a gear 22, and a motor 23. The gear 21 is attached to the ambient environment detection apparatus 11. Teeth of the gear 22 are meshed with teeth of the gear 21. The gear 22 is attached to a drive shaft 24 of the motor 23. In the drive mechanism 20 configured in this way, as the drive shaft 24 of the motor 23 rotates, the ambient environment detection apparatus 11 rotates around the rotating shaft 13 in conjunction with the rotation, and a direction of the detection center axis 12 of the ambient environment detection apparatus 11 is changed to a vertical direction.

Note that the configuration of the drive mechanism 20 illustrated in Fig. 5 is merely an example. The configuration of the drive mechanism 20 is arbitrary as long as the posture of the ambient environment detection apparatus 11 can be mechanically changed. For example, the drive mechanism 20 may include a linear actuator instead of the gear 21, the gear 22, and the motor 23, and the linear actuator may rotate the ambient environment detection apparatus 11 around the rotating shaft 13. Further, for example, the ambient environment detection apparatus 11 may be attached to the lean vehicle 1 via a holder that holds the ambient environment detection apparatus 11. Further, such a holder may include an adjusting screw for adjusting an orientation of the vertical direction of the detection center axis 12 of the ambient environment detection apparatus 11. In such a case, the drive mechanism 20 may have a configuration in which a driving force of the motor, etc. is transmitted to the adjusting screw to rotate the adjusting screw. Further, the drive mechanism 20 may rotate the adjusting screw to change the posture of the ambient environment detection apparatus 11 so that the orientation of the vertical direction of the detection center axis 12 of the ambient environment detection apparatus 11 changes.

For example, the control apparatus 30 includes a microcomputer, a microprocessor unit, etc. in part or in whole. Further, for example, the control apparatus 30 may be configured by an updatable one such as firmware, or may be a program module, etc. executed by a command from a CPU, etc. in part or in whole. For example, the control apparatus 30 may be one apparatus or may be divided into a plurality of parts. Further, at least a part of the control apparatus 30 may be formed integrally with at least a part of the control apparatus 5. The control apparatus 30 controls the posture of the ambient environment detection apparatus 11. Specifically, the control apparatus 30 is configured to operate the drive mechanism 20 when the lean vehicle 1 turns and change the posture of the ambient environment detection apparatus 11 so that the detection center axis 12 of the ambient environment detection apparatus 11 is directed upward when compared to a case where the drive mechanism 20 is not operated. For example, the control apparatus 30 may be configured as in Fig. 6.

Fig. 6 is a block diagram illustrating an example of the control apparatus of the ambient environment acquisition system according to the embodiment of the invention.

The control apparatus 30 operates the drive mechanism 20 based on a direction result of the traveling state detection apparatus 40 that detects information on a traveling state of the lean vehicle 1.

The traveling state detection apparatus 40 includes at least one detection device. The detection device included in the traveling state detection apparatus 40 may be a detection device provided exclusively to the traveling state detection apparatus 40, or a detection device used for other purposes may be used as the detection device of the traveling state detection apparatus 40.

The traveling state detection apparatus 40 includes at least a detection device that detects information on a turning degree of the lean vehicle 1. Here, the turning degree indicates a degree of turning of the lean vehicle 1. For example, when the lean vehicle 1 is traveling at the same speed, as a turning radius decreases, the turning degree increases. Further, for example, when the lean vehicle 1 is turning at the same turning radius, as a speed increases, the turning degree increases. Further, as the turning degree increases, at least one of the lean angle of the lean vehicle 1 and the steering angle by self-steering increases. For this reason, as the turning degree increases, a shift of the detection center axis 12 of the ambient environment detection apparatus 11 increases during straight traveling and turning in the lean vehicle 1.

For example, the traveling state detection apparatus 40 includes a detection device that detects at least one of the lean angle, yaw rate, and lateral acceleration of the lean vehicle 1 as a detection device that detects information on the turning degree of the lean vehicle 1. Note that the detection device that detects at least one of the lean angle, yaw rate, and lateral acceleration of the lean vehicle 1 may detect a physical quantity that can be substantially converted into such information. As the turning degree of the lean vehicle 1 increases, the lean angle of the lean vehicle 1 generally increases. Further, when the lean vehicle 1 turns, the yaw rate and the lateral acceleration of the lean vehicle 1 generally increase or decrease in accordance with the increase or decrease of the lean angle of the lean vehicle 1. Therefore, the lean angle, yaw rate, and lateral acceleration of the lean vehicle 1 can be used as information on the turning degree of the lean vehicle 1.

Note that when detecting a plurality of lean angles, yaw rates, and lateral accelerations of the lean vehicle 1, the traveling state detection apparatus 40 may include separate detection devices for detecting respective pieces of information, or detect at least two of the pieces information by one detection device. In the present embodiment, the traveling state detection apparatus 40 includes an inertia measurement device as a detection device that detects information on the turning degree of the lean vehicle 1, and detects at least one of the lean angle, yaw rate, and lateral acceleration of the lean vehicle 1. The inertia measurement device includes a three-axis gyro sensor and a three-direction acceleration sensor, and outputs detection results of the three-axis acceleration and the three-axis angular velocity of the lean vehicle 1.

In the case of including the detection device that detects at least one of the lean angle, yaw rate, and lateral acceleration of the lean vehicle 1, it is preferable that the traveling state detection apparatus 40 includes a detection device that detects the steering angle of the lean vehicle 1 as the detection device that detects information on the turning degree of the lean vehicle 1. Note that the detection device that detects the steering angle of the lean vehicle 1 may detect a physical quantity that can be substantially converted into the steering angle of the lean vehicle 1. As described above, the shift of the detection center axis 12 of the ambient environment detection apparatus 11 during straight traveling and turning in the lean vehicle 1 results from the lean angle and the steering angle of the lean vehicle 1. Therefore, by detecting the steering angle of the lean vehicle 1, the control apparatus 30 can more accurately understand the shift of the detection center axis 12 of the ambient environment detection apparatus 11 during straight traveling and turning in the lean vehicle 1.

Further, for example, when the ambient environment detection apparatus 11 is an image pickup apparatus, the traveling state detection apparatus 40 may use the ambient environment detection apparatus 11 as the detection device that detects information on the turning degree of the lean vehicle 1. A reason is that by comparing imaging data of the ambient environment detection apparatus 11 when the lean vehicle 1 is traveling straight with imaging data of the ambient environment detection apparatus 11 when the lean vehicle 1 is turning, it is possible to detect the shift of the detection center axis 12 of the ambient environment detection apparatus 11 during straight traveling and turning in the lean vehicle 1.

Further, in the case of including the detection device that detects at least one of the lean angle, yaw rate, and lateral acceleration of the lean vehicle 1, it is preferable that the traveling state detection apparatus 40 includes a detection device that detects posture information in a pitching direction while the lean vehicle 1 turns in addition to the detection device that detects information on the turning degree of the lean vehicle 1. The pitching direction is a direction indicated by an arcuate arrow P in Fig. 1. When the posture of the lean vehicle 1 in the pitching direction changes during the turning of the lean vehicle 1, the amount of the shift of the detection center axis 12 of the ambient environment detection apparatus 11 during straight traveling and turning in the lean vehicle 1. Therefore, by detecting the posture information in the pitching direction during turning of the lean vehicle 1, the control apparatus 30 can more accurately understand the shift of the detection center axis 12 of the ambient environment detection apparatus 11 during straight traveling and turning in the lean vehicle 1.

For example, the traveling state detection apparatus 40 includes a detection device that detects a pitching angle of the lean vehicle 1 as the detection device that detects posture information in the pitching direction during turning of the lean vehicle 1. A reason is that when the posture of the lean vehicle 1 in the pitching direction changes, the pitching angle of the lean vehicle 1 changes. Note that the detection device that detects the pitching angle of the lean vehicle 1 may detect a physical quantity that can be substantially converted into the pitching angle of the lean vehicle 1. In the present embodiment, the above-mentioned inertia measurement device is used as the detection device that detects the pitching angle of the lean vehicle 1.

Further, for example, the detection device, which detects the posture information in the pitching direction during turning of the lean vehicle 1, provided in the traveling state detection apparatus 40 may be a detection device that detects the amount of expansion and contraction of the suspension 4 on the front wheel 3 side of the lean vehicle 1. A reason is that when the posture of the lean vehicle 1 in the pitching direction changes, the amount of expansion and contraction of the suspension 4 changes. Note that the detection device that detects the amount of expansion and contraction of the suspension 4 may detect a physical quantity that can be substantially converted into the amount of expansion and contraction of the suspension 4.

Further, for example, the detection device, which detects the posture information in the pitching direction during turning of the lean vehicle 1, provided in the traveling state detection apparatus 40 may be a detection device that detects the acceleration and deceleration of the lean vehicle 1 in a front-back direction. A reason is that when the posture of the lean vehicle 1 in the pitching direction changes, the acceleration and deceleration of the lean vehicle 1 in the front-back direction changes. Note that the detection device that detects the acceleration and deceleration of the lean vehicle 1 in the front-back direction may detect a physical quantity that can be substantially converted into the acceleration and deceleration of the lean vehicle 1 in the front-back direction. In the present embodiment, the above-mentioned inertia measurement device is used as the detection device that detects the acceleration and deceleration of the lean vehicle 1 in the front-back direction. Note that the acceleration and deceleration of the lean vehicle 1 in the front-back direction may be detected from the amount of change in the speed of the lean vehicle 1 per unit time.

The control apparatus 30 includes an information acquisition unit 31, a raising angle determination unit 32, and an operation control unit 33 as functional units.

The information acquisition unit 31 is a functional unit that acquires a detection result of the traveling state detection apparatus 40. The operation control unit 33 is a functional unit that operates the drive mechanism 20 to obtain a raising angle θ determined as described later by the raising angle determination unit 32.

The raising angle determination unit 32 is a functional unit that determines the amount by which the detection center axis 12 of the ambient environment detection apparatus 11 is directed upward when the lean vehicle 1 turns. Specifically, when the lean vehicle 1 turns, an angle at which the detection center axis 12 of the ambient environment detection apparatus 11 is directed upward is defined as the raising angle θ when compared to a case where the drive mechanism 20 is not operated. Here, a case where the drive mechanism 20 is not operated when the lean vehicle 1 turns is a case where the drive mechanism 20 is not operated from straight traveling when the lean vehicle 1 turns from a straight traveling state. For example, the detection center axis 12 of the ambient environment detection apparatus 11 that is in a horizontal direction of the page in Fig. 5 is set to the detection center axis 12 of the ambient environment detection apparatus 11 when the lean vehicle 1 is traveling straight. Further, the detection center axis 12 of the ambient environment detection apparatus 11 rising toward the right side of the page in Fig. 5 is set to the detection center axis 12 of the ambient environment detection apparatus 11 when the lean vehicle 1 is turning. In this case, the raising angle θ is as illustrated in Fig. 5.

For example, the raising angle θ may be a fixed value. In this case, when the turning degree of the lean vehicle 1 becomes equal to or greater than a specified threshold value, the raising angle determination unit 32 sets the raising angle θ to a fixed value larger than 0°. Further, when the turning degree of the lean vehicle 1 becomes smaller than the specified threshold value, the raising angle determination unit 32 sets the raising angle θ to 0°. By determining the raising angle θ in this way, it is possible to suppress the shift of the detection center axis 12 of the ambient environment detection apparatus 11 in the vertical direction when viewed from a side of the lean vehicle 1 during straight traveling and turning of the lean vehicle 1 more than that in the past when the operation control unit 33 operates the drive mechanism 20 during turning of the lean vehicle 1.

Further, the raising angle determination unit 32 may determine the raising angle θ according to the turning degree of the lean vehicle 1. That is, the raising angle determination unit 32 may determine the raising angle θ to a larger value as the turning degree of the lean vehicle 1 increases. Note that a method of changing the raising angle θ is arbitrary. As the turning degree of the lean vehicle 1 increases, the value of the raising angle θ may be linearly increased, or the value of the raising angle θ may be increased stepwise. When the raising angle determination unit 32 determines the raising angle θ according to the turning degree of the lean vehicle 1, it is possible to further suppress the shift of the detection center axis 12 of the ambient environment detection apparatus 11 in the vertical direction when viewed from the side of the lean vehicle 1 during straight traveling and turning of the lean vehicle 1 when the operation control unit 33 operates the drive mechanism 20 during turning of the lean vehicle 1.

For example, the raising angle determination unit 32 uses the lean angle of the lean vehicle 1 as a parameter for obtaining the turning degree to determine the raising angle θ based on the lean angle. Specifically, the raising angle determination unit 32 determines the raising angle θ to a larger value as the lean angle of the lean vehicle 1 becomes larger when the lean vehicle 1 turns. Further, for example, the raising angle determination unit 32 uses the yaw rate of the lean vehicle 1 as a parameter for obtaining the turning degree to determine the raising angle θ based on the yaw rate. Specifically, the raising angle determination unit 32 determines the raising angle θ to a larger value as the yaw rate of the lean vehicle 1 increases when the lean vehicle 1 turns. Further, for example, the raising angle determination unit 32 uses the lateral acceleration of the lean vehicle 1 as a parameter for obtaining the turning degree to determine the raising angle θ based on the lateral acceleration. Specifically, the raising angle determination unit 32 determines the raising angle θ to a larger value as the lateral acceleration of the lean vehicle 1 increases when the lean vehicle 1 turns.

Note that the raising angle determination unit 32 may use a plurality of the lean angle, yaw rate, and lateral acceleration of the lean vehicle 1 as parameters for obtaining the turning degree to determine the raising angle θ. In this way, it is possible to accurately understand the turning degree of the lean vehicle 1, and it is possible to further suppress the shift of the detection center axis 12 of the ambient environment detection apparatus 11 in the vertical direction when viewed from the side of the lean vehicle 1 during straight traveling and turning of the lean vehicle 1 when the operation control unit 33 operates the drive mechanism 20 during turning of the lean vehicle 1.

Further, in the case of using at least one of the lean angle, yaw rate, and lateral acceleration of the lean vehicle 1 as a parameter for obtaining the turning degree, the raising angle determination unit 32 may further use the steering angle of the lean vehicle 1 as a parameter for obtaining the turning degree to determine the raising angle θ by these parameters. Specifically, the raising angle determination unit 32 determines the raising angle θ to a larger value as the steering angle becomes larger when the lean vehicle 1 turns. As described above, the shift of the detection center axis 12 of the ambient environment detection apparatus 11 during straight traveling and turning in the lean vehicle 1 results from the lean angle and the steering angle of the lean vehicle 1. For this reason, by using the steering angle of the lean vehicle 1 as one parameter for obtaining the turning degree, it is possible to further suppress the shift of the detection center axis 12 of the ambient environment detection apparatus 11 in the vertical direction when viewed from the side of the lean vehicle 1 during straight traveling and turning of the lean vehicle 1 when the operation control unit 33 operates the drive mechanism 20 during turning of the lean vehicle 1.

Further, for example, when the ambient environment detection apparatus 11 is an image pickup apparatus, the raising angle determination unit 32 may determine the raising angle θ from imaging data of the ambient environment detection apparatus 11. By comparing imaging data of the ambient environment detection apparatus 11 when the lean vehicle 1 is traveling straight with imaging data of the ambient environment detection apparatus 11 when the lean vehicle 1 is turning, it is possible to directly and complementally determine the shift of the detection center axis 12 of the ambient environment detection apparatus 11 during straight traveling and turning in the lean vehicle 1. For this reason, it is possible to suppress the shift of the detection center axis 12 of the ambient environment detection apparatus 11 in the vertical direction when viewed from the side of the lean vehicle 1 during straight traveling and turning of the lean vehicle 1 when the operation control unit 33 operates the drive mechanism 20 during turning of the lean vehicle 1.

Further, in the case of using at least one of the lean angle, yaw rate, and lateral acceleration of the lean vehicle 1 as a parameter for obtaining the turning degree, the raising angle determination unit 32 may determine the raising angle θ based on the above-mentioned turning degree and the posture information in the pitching direction during turning of the lean vehicle 1. Specifically, the raising angle determination unit 32 determines the raising angle θ to a larger value as the amount of sinking of the front with respect to the back in the vehicle body of the lean vehicle 1 increases when the lean vehicle 1 turns. Further, the raising angle determination unit 32 determines the raising angle θ to a smaller value as the amount of lifting of the front with respect to the back in the vehicle body of the lean vehicle 1 increases when the lean vehicle 1 turns.

For example, the raising angle determination unit 32 uses the pitching angle of the lean vehicle 1 as posture information in the pitching direction during turning of the lean vehicle 1. For example, the raising angle determination unit 32 uses the amount of expansion and contraction of the suspension 4 on the front wheel 3 side of the lean vehicle 1 as the posture information in the pitching direction during turning of the lean vehicle 1. For example, the raising angle determination unit 32 uses the acceleration and deceleration of the lean vehicle 1 in the front-back direction as the posture information in the pitching direction during turning of the lean vehicle 1. Specifically, the raising angle determination unit 32 determines the raising angle θ to a larger value as the deceleration increases when the lean vehicle 1 moves forward. Further, the raising angle determination unit 32 determines the raising angle θ to a smaller value as the acceleration increases when the lean vehicle 1 moves forward.

### <Operation of control apparatus of ambient environment acquisition system>

A description will be given of an operation of the control apparatus 30 of the ambient environment acquisition system 10 according to the embodiment.

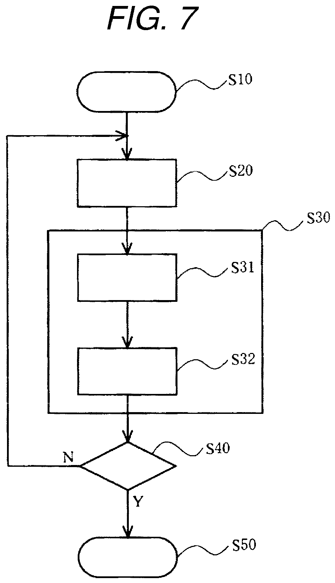

Fig. 7 is a diagram illustrating a control flow of an example of an operation in the control apparatus of the ambient environment acquisition system according to the embodiment of the invention.

When a control start condition is satisfied, the control apparatus 30 starts control illustrated in Fig. 7 in step S10. The control start condition is a time when an engine of the lean vehicle 1 is started, etc. Step S20 is an information acquisition step. In step S20, the information acquisition unit 31 of the control apparatus 30 acquires a detection result of the traveling state detection apparatus 40.

Step S30 after step S20 is a posture control step. The posture control step refers to a control step in which when the lean vehicle 1 turns, the drive mechanism 20 is operated to change the posture of the ambient environment detection apparatus 11 so that the detection center axis 12 of the ambient environment detection apparatus 11 is directed upward when compared to a case where the drive mechanism 20 is not operated. Step S30 (posture control step) according to the present embodiment includes steps S31 and S32.

Specifically, in step S31, the raising angle determination unit 32 of the control apparatus 30 determines the raising angle θ by any of the above-mentioned methods based on a detection result of the traveling state detection apparatus 40 acquired in step S10. In step S32 after step S31, the operation control unit 33 of the control apparatus 30 operates the drive mechanism 20 to obtain the raising angle θ determined in step S32.

Step S40 after step S30 is an end determination step. In step S40, the control apparatus 30 determines whether or not a control end condition is satisfied. The control end condition is that the engine of the lean vehicle 1 is stopped. When the control end condition is satisfied, the control apparatus 30 proceeds to step S50 and ends the control illustrated in Fig. 7. On the other hand, when the control end condition is not satisfied, the control apparatus 30 repeats steps S20 to S40. Note that when the lean vehicle 1 is in the straight traveling state in a process of repeating steps S20 to S40, the control apparatus 30 returns the raising angle θ to 0° in step S30. Specifically, in step S31, the raising angle determination unit 32 determines the raising angle θ to 0°. Further, in step S32, the operation control unit 33 operates the drive mechanism 20 so that the raising angle θ becomes 0°.

### <Effect of control apparatus of ambient environment acquisition system>

The control apparatus 30 according to the present embodiment is a control apparatus that controls the posture of the ambient environment detection apparatus 11 that detects the ambient environment of the lean vehicle 1 in order to assist the rider of the lean vehicle 1 in driving. When mounted to the lean vehicle 1, the ambient environment detection apparatus 11 detects at least the ambient environment in front of the lean vehicle 1 and moves together with the handlebar 2 of the lean vehicle 1. The control apparatus 30 is configured to operate the drive mechanism 20 that changes the posture of the ambient environment detection apparatus 11 when the lean vehicle 1 turns and change the posture of the ambient environment detection apparatus 11 so that the detection center axis 12 of the ambient environment detection apparatus 11 is directed upward when compared to a case where the drive mechanism 20 is not operated.

In the control apparatus 30 configured in this way, when the lean vehicle 1 turns, the drive mechanism 20, that is, a mechanical mechanism changes the posture of the ambient environment detection apparatus 11 so that the detection center axis 12 of the ambient environment detection apparatus 11 is directed upward when compared to a case where the drive mechanism 20 is not operated. For this reason, in the control apparatus 30 configured in this way, even in the case of a configuration in which the ambient environment detection apparatus 11 moves together with the handlebar 2 of the lean vehicle 1, it is possible to reduce the shift of the detection center axis 12 of the ambient environment detection apparatus 11 in the vertical direction during straight traveling and turning of the lean vehicle 1 more than that in the past. Therefore, the control apparatus 30 configured in this way can suppress a decrease in accuracy of the rider assistance by the rider assistance system more than that in the past even in the case of the configuration in which the ambient environment detection apparatus 11 moves together with the handlebar 2 of the lean vehicle 1.

The control apparatus 30 according to the present embodiment has been described above. However, the control apparatus according to the invention is not limited to the description of the present embodiment, and only a part of the present embodiment may be implemented.

For example, in the above description, when the lean vehicle 1 turns, the detection center axis 12 of the ambient environment detection apparatus 11 is directed upward by rotating the ambient environment detection apparatus 11 around an axis along a width direction of the handlebar 2. However, the detection center axis 12 of the ambient environment detection apparatus 11 may be directed upward by rotating the ambient environment detection apparatus 11 around an axis forming a predetermined angle with respect to the axis along the width direction of the handlebar 2. For example, the predetermined angle may be an angle at which an orientation of the detection center axis 12 of the ambient environment detection apparatus 11 is changed along a vertical direction of a road surface, or an angle at which the detection center axis 12 of the ambient environment detection apparatus 11 is directed in a traveling direction of the lean vehicle 1. In addition, the orientation of the detection center axis 12 of the ambient environment detection apparatus 11 may be changed in a direction parallel to the road surface after the detection center axis 12 of the ambient environment detection apparatus 11 is directed upward by rotating the ambient environment detection apparatus 11 around the axis along the width direction of the handlebar 2.

In addition, for example, when the lean vehicle 1 turns, in addition to changing the posture of the ambient environment detection apparatus 11 by the control apparatus 30 so that the detection center axis 12 of the ambient environment detection apparatus 11 is directed upward, a detection range of the ambient environment detection apparatus 11 may be changed by software.

## Claims

1. A control apparatus (30) for controlling a posture of an ambient environment detection apparatus (11) that detects an ambient environment of a lean vehicle (1) to assist a rider of the lean vehicle (1) in driving,
wherein when the ambient environment detection apparatus (11) is mounted to the lean vehicle (1), the ambient environment detection apparatus (11) detects at least an ambient environment in front of the lean vehicle (1) and moves together with a handlebar (2) of the lean vehicle (1), and
the control apparatus (30) is configured to operate a drive mechanism (20) that changes the posture of the ambient environment detection apparatus (11) when the lean vehicle (1) turns and change the posture of the ambient environment detection apparatus (11) so that a detection center axis (12) of the ambient environment detection apparatus (11) is directed upward when compared to a case where the drive mechanism (20) is not operated.

2. The control apparatus (30) according to claim 1, wherein in a case where an angle at which the detection center axis (12) of the ambient environment detection apparatus (11) is directed upward when the lean vehicle (1) turns compared to a case where the drive mechanism (20) is not operated is set to a raising angle (θ), the raising angle (θ) is determined according to a turning degree of the lean vehicle (1) during turning.

3. The control apparatus (30) according to claim 2, wherein a lean angle of the lean vehicle (1) is used as a parameter for obtaining the turning degree to determine the raising angle (θ) based on the lean angle.

4. The control apparatus (30) according to claim 2 or 3, wherein a yaw rate of the lean vehicle (1) is used as a parameter for obtaining the turning degree to determine the raising angle (θ) based on the yaw rate.

5. The control apparatus (30) according to any one of claims 2 to 4, wherein a lateral acceleration of the lean vehicle (1) is used as a parameter for obtaining the turning degree to determine the raising angle (θ) based on the lateral acceleration.

6. The control apparatus (30) according to any one of claims 3 to 5, wherein a steering angle of the lean vehicle (1) is further used as a parameter for obtaining the turning degree to determine the raising angle (θ) based on the parameters.

7. The control apparatus (30) according to any one of claims 2 to 6,
wherein the ambient environment detection apparatus (11) is an image pickup apparatus, and
the raising angle (θ) is determined from imaging data of the image pickup apparatus.

8. The control apparatus (30) according to any one of claims 2 to 7, wherein the raising angle (θ) is determined based on posture information in a pitching direction during turning of the lean vehicle (1) and the turning degree.

9. The control apparatus (30) according to claim 8, wherein a pitching angle of the lean vehicle (1) is used as the posture information in the pitching direction.

10. The control apparatus (30) according to claim 8 or 9, wherein an amount of expansion and contraction of a suspension (4) of the lean vehicle (1) on a side of a front wheel (3) is used as the posture information in the pitching direction.

11. The control apparatus (30) according to any one of claims 8 to 10, wherein acceleration and deceleration of the lean vehicle (1) in a front-back direction is used as the posture information in the pitching direction.

12. An ambient environment acquisition system (10) comprising:
an ambient environment detection apparatus (11) that detects at least an ambient environment in front of a lean vehicle (1) when mounted to the lean vehicle (1) and moves together with a handlebar (2) of the lean vehicle (1);
a drive mechanism (20) that changes a posture of the ambient environment detection apparatus (11); and
the control apparatus (30) according to any one of claims 1 to 11.

13. A lean vehicle (1) comprising
the ambient environment acquisition system (10) according to claim 12.

14. A control method of controlling a posture of an ambient environment detection apparatus (11) that detects an ambient environment of a lean vehicle (1) to assist a rider of the lean vehicle (1) in driving,
when the ambient environment detection apparatus (11) is mounted to the lean vehicle (1), the ambient environment detection apparatus (11) detecting at least an ambient environment in front of the lean vehicle (1) and moving together with a handlebar (2) of the lean vehicle (1),
the method comprising
a posture control step (S30) of operating, by a control apparatus (30), a drive mechanism (20) that changes the posture of the ambient environment detection apparatus (11) when the lean vehicle (1) turns and changing the posture of the ambient environment detection apparatus (11) so that a detection center axis (12) of the ambient environment detection apparatus (11) is directed upward when compared to a case where the drive mechanism (20) is not operated.
